# EUROPEAN PATENT APPLICATION

(11) **EP 4 787 578 A1**
(43) Date of publication of application: **05.08.2026**
(21) Application number: 24870501.4
(22) Date of filing: 14.09.2024
(51) Int. Cl.: H01M 50/244, H01M 50/50, H01M 50/507, H01M 50/249

(54) **BATTERY PACK ASSEMBLY AND ELECTRIC DEVICE COMPRISING SAME**

(30) Priority: 25.09.2023 CN 202311246437
(71) Applicant: BYD Company Limited, Shenzhen, Guangdong 518118 (CN)
(72) Inventor: CAO, Yanwen, Shenzhen, Guangdong 518118 (CN); YANG, Jiahui, Shenzhen, Guangdong 518118 (CN); CHEN, Boyu, Shenzhen, Guangdong 518118 (CN)
(74) Representative: Mathys & Squire
(86) International application number: PCT/CN2024/119123
(87) International publication number: WO 2025/066957

(57) **Abstract**

A battery pack assembly (1) and an electric device comprising same. The battery pack assembly (1) comprises a tray (10), a battery assembly (200), and a power distribution box (30). The power distribution box (30) has a positive input terminal (31) and a negative input terminal (32). The power distribution box (30) is arranged on one side of the battery assembly (200). There is a first line segment (12) between the projections of a total positive terminal (21) and a total negative terminal (22) on a frame (17) in the direction perpendicular to the frame (17). There are a first projection point (13) and a second projection point (14) in respective projections of the positive input terminal (31) and the negative input terminal (32) on the frame (17) in the direction perpendicular to the frame (17). The first projection point (13) and the second projection point (14) are located in the first line segment (12).

## Description

### CROSS-REFERENCE TO RELATED APPLICATIONS

The present disclosure claims priority to a Chinese Patent Application with application number 2023112464379 titled "BATTERY PACK ASSEMBLY AND ELECTRIC DEVICE COMPRISING SAME" filed on September 25, 2023, which is incorporated herein by reference in its entirety.

### FIELD

The present disclosure relates to the field of batteries, and in particular, to a battery pack assembly and an electrical device comprising same.

### BACKGROUND

In the related art, a battery pack has high voltage requirements, so the batteries are mostly connected in series to form the battery components in the battery pack, which leads to the scattered positions of a total positive terminal and a total negative terminal of the battery components, and a power distribution box is generally connected to the total positive terminal and the total negative terminal respectively through a bus bar. Therefore, the length of the bus bar is long, and more fixing components are required to fix the bus bar, resulting in difficult assembly of the bus bar and a high cost of the battery pack.

### SUMMARY

The present disclosure aims to solve at least one of the technical problems existing in the prior art. To this end, an object of the present disclosure is to propose a battery pack assembly, a first projection point and a second projection point of the battery pack assembly are located in a first line segment, to ensure the path of a bus bar connecting a power distribution box and a battery assembly is shortened and the length dimension of the bus bar is reduced.

The present disclosure further proposes an electrical device having the battery pack assembly described above.

The battery pack assembly according to the present disclosure includes: a tray, the tray having a bottom plate and a frame, the frame being arranged on the bottom plate and forming an accommodating cavity together with the bottom plate; a battery assembly, the battery assembly having a total positive terminal and a total negative terminal; a power distribution box, the power distribution box having a positive input terminal and a negative input terminal, the power distribution box being arranged on one side of the battery assembly; wherein a first line segment is arranged between the projections of the total positive terminal and the total negative terminal on the frame in a direction perpendicular to the frame, a first projection point and a second projection point are respectively defined by projections of the positive input terminal and the negative input terminal on the corresponding frame in the direction perpendicular to the frame, and the first projection point and the second projection point are located in the first line segment.

According to the battery pack assembly of the present disclosure, the first projection point and the second projection point are located in the first line segment, to ensure the path of a bus bar connecting the power distribution box and the battery assembly is shortened, thereby reducing a length dimension of the bus bar, thereby reducing the production cost of the battery pack assembly, and at the same time, reducing the number of fixing components required for fixing the bus bar, improving the assembly efficiency of the battery pack assembly, and further reducing the production cost of the battery pack assembly.

The electrical device according to the present disclosure includes the battery pack assembly according to any one of the above embodiments, and since the electrical device according to the present disclosure is arranged with the battery pack assembly according to the above embodiments, the production efficiency of the electrical device is high and the production cost is low.

Additional aspects and advantages of the present disclosure will be partly presented in the following description, and partly will become apparent from the following description, or will be learned by the practice of the present disclosure.

### BRIEF DESCRIPTION OF THE DRAWINGS

FIG. 1 is an explosion diagram of a tray, a battery, and a power distribution box according to an embodiment of the present disclosure;
FIG. 2 is a schematic structural diagram of a battery pack assembly according to an embodiment of the present disclosure;
FIG. 3 is an enlarged view of circled A in FIG. 2;
FIG. 4 is an enlarged view of circled B in FIG. 2;
FIG. 5 is a top view of a battery pack assembly according to an embodiment of the present disclosure;
FIG. 6 is an explosion view of a battery pack assembly according to an embodiment of the present disclosure;
FIG. 7 is a schematic structural diagram of an electrical device according to an embodiment of the present disclosure.

### Reference numerals:

100: electrical device; 1: battery pack assembly;
10: tray; 11: cross beam; 111: riveting nut; 12: first line segment; 13: first projection point; 14: second projection point; 15: first point position; 16: second point position; 17: frame; 18: side beam; 19: bottom plate; 10a: accommodating cavity; 10b: first accommodating cavity; 10c: second accommodating cavity
20: battery pack assembly; 21: total positive terminal; 22: total negative terminal; 200: battery assembly
30: power distribution box; 31: positive input terminal; 32: negative input terminal; 33: fastener mounting groove; 34: clearance hole; 301: side portion; 302: top portion
41: first terminal; 42: second terminal; 43: third terminal; 44: fourth terminal
51: connection row; 52: positive bus bar; 53: negative bus bar; 54: first wire harness; 55: second wire harness
60: pressure plate; 61: welding nut; 70: bolt; 80: cover plate

### DETAILED DESCRIPTION

Hereinafter, embodiments of the present disclosure are described in detail, examples of the embodiments are shown in the accompanying drawings, in which the same or similar reference numerals denote the same or similar elements or elements having the same or similar functions throughout. The embodiments described below with reference to the accompanying drawings are exemplary and are merely used to explain the present disclosure, and will not be construed as limiting the present disclosure.

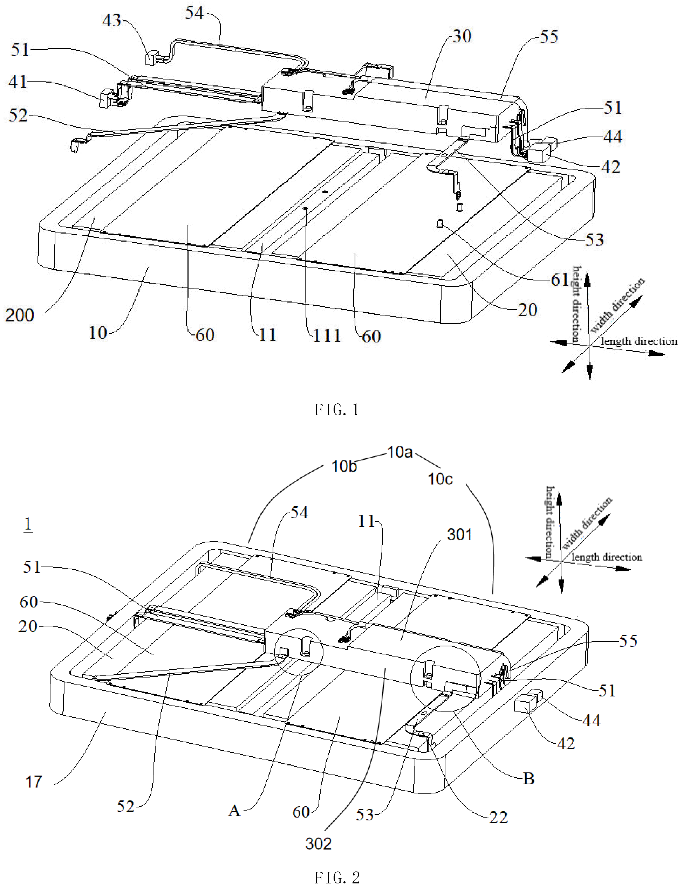

Hereinafter, a battery pack assembly 1 according to an embodiment of the present disclosure will be described with reference to FIGS. 1 to 6.

As shown in FIGS. 1 to 6, the battery pack assembly 1 according to the present disclosure includes: a tray 10, a battery assembly 200, and a power distribution box 30, the tray 10 has a bottom plate 19 and a frame 17, the frame 17 is arranged on the bottom plate 19 and forms an accommodating cavity 10a together with the bottom plate 19, the battery assembly 200 has a total positive terminal 21 and a total negative terminal 22, the power distribution box 30 has a positive input terminal 31 and a negative input terminal 32, and the power distribution box 30 is arranged on one side of the battery assembly 200; wherein a first line segment 12 is arranged between the projections of the total positive terminal 21 and the total negative terminal 22 on the frame 17 in a direction perpendicular to the frame 17, a first projection point 13 and a second projection point 14 are respectively defined by projections of the positive input terminal 31 and the negative input terminal 32 on the corresponding frame 17 in the direction perpendicular to the frame 17, the first projection point 13 and the second projection point 14 are located in the first line segment 12.

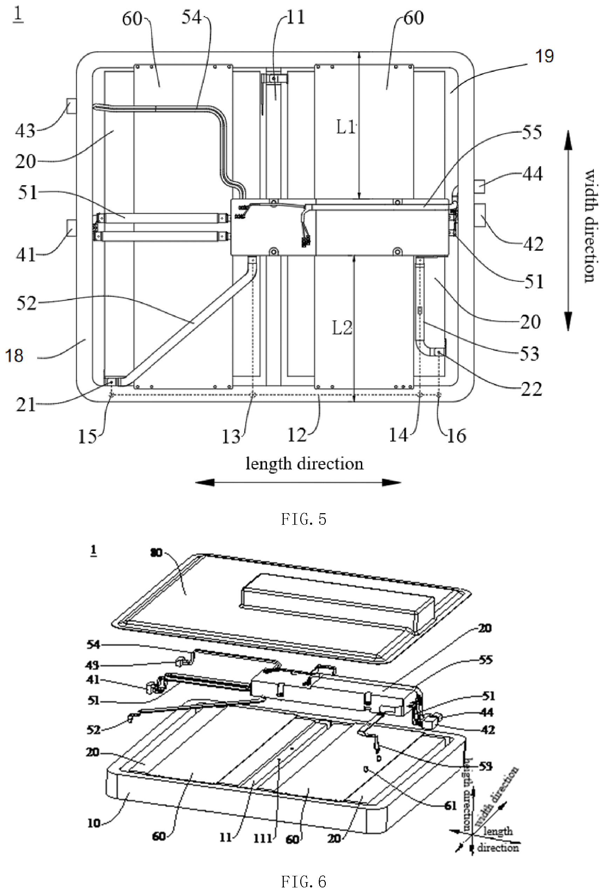

The tray 10 includes the bottom plate 19 and the frame 17, the frame 17 is arranged on the outer periphery of the bottom plate 19 and forms an accommodating cavity 10a together with the bottom plate 19, the battery assembly 200 is accommodated in the accommodating cavity 10a and has the total positive terminal 21 and the total negative terminal 22, and the power distribution box 30 is formed with the positive input terminal 31 cooperating with the total positive terminal 21 and the negative input terminal 32 cooperating with the total negative terminal 22. It will be understood that, in a horizontal direction, the projection of the total positive terminal 21 on the frame 17 in the direction perpendicular to the frame 17 is configured as a first point position 15, the projection of the total negative terminal 22 on the frame 17 in the direction perpendicular to the frame 17 is configured as a second point position16, a line connecting the first point position 15 and the second point position 16 is configured as the first line segment 12, the projection of the positive input 31 on the frame 17 in the direction perpendicular to the frame 17 is configured as the first projection point 13, and the projection of the negative input 32 on the frame 17 in the direction perpendicular to the frame 17 is configured as the second projection point 14, the first projection point 13 and the second projection point 14 are located in the first line segment 12, wherein the first projection point 13 and the second projection point 14 in the first line segment 12 include the first projection point 13 and the second projection point 14 are located in the first line segment 12, and also include the first projection point 13 and the second projection point 14 are located at two end points of the first line segment 12 (that is, the first point position 15 and the second point position 16). In some embodiments, the above horizontal direction is a length direction or a width direction of the battery pack assembly 1. In the embodiment of the present disclosure, as shown in FIG. 5, the length direction of the battery pack assembly 1 is selected as the horizontal direction.

Further, it will be understood that the frame 17 of the tray has a plurality of side beams 18, and the plurality of side beams 18 are sequentially connected end to end to form the frame 17. The first line segment being arranged between the projections of the total positive terminal and the total negative terminal on the frame in the direction perpendicular to the frame is: the total positive terminal 21 and the total negative terminal 22 are respectively projected orthogonally on each side beam 18 of the frame 17 in a direction perpendicular to the corresponding side beam 18, and then the first line segment 12 is determined on each side beam 18. The first projection point and the second projection point respectively defined by projections of the positive input terminal and the negative input terminal on the corresponding frame in the direction perpendicular to the frame are: the positive input terminal 31 and the negative input terminal 32 are respectively projected orthogonally on each side beam 18 of the frame 17 in the direction perpendicular to the corresponding side beam 18 to determine the first projection point 13 and the second projection point 14. For the first line segment 12, the first projection point 13 and the second projection point 14 located on each side beam 18, whether the first projection point 13 and the second projection point 14 are satisfied to be located in the first line segment 12 on the side beam 18 is determined. It is sufficient if the first projection point 13 and the second projection point 14 are located in the first line segment 12 on one of the side beams 18.

It will be understood that, with reference to FIGS. 1 to 6, the total positive terminal 21 and the total negative terminal 22 of the battery assembly 200 are generally positive electrode posts or negative electrode posts of a battery, and generally, the total positive terminal 21 and the total negative terminal 22 of the battery assembly 200 are arranged on two opposite sides of the battery assembly 200. The positive input terminal 31 and the negative input terminal 32 of the power distribution box 30 are generally an electrical connection terminal, and the position of the terminal can be adjusted according to the specific application situation. Therefore, in an embodiment, the electrical connection terminal may be a connection row, so when the first projection point 13 and the second projection point 14 are respectively defined by projections of the positive input terminal 31 and the negative input terminal 32 on the corresponding frame 17 in the direction perpendicular to the frame 17, the positive input terminal 31 and the negative input terminal 32 are connection points between the electrical connection terminal and a bus bar, that is, the connection point is orthogonally projected on the corresponding frame 17 in the direction perpendicular to the frame 17, thereby forming the first projection point and the second projection point. Alternatively, in an embodiment, in order to facilitate the measurement of the corresponding line segment and projection point, the position where the bus bar first contacts the power distribution box 30 may be taken as the total positive terminal 21 or the total negative terminal 22, that is, the position where the bus bar first contacts the power distribution box 30 is orthogonally projected on the corresponding frame 17 in the direction perpendicular to the frame 17, thereby forming the first projection point 13 and the second projection point 14. In the above embodiments, when the bus bar first contacts the power distribution box 30 and the above relationship is satisfied (that is, the first projection point 13 and the second projection point 14 are located in the first line segment 12), the effect of shortening the length dimension of the bus bar and reducing the number of fixing components for fixing the bus bar can be realized, so the position can be used as the positive input terminal 31 and the negative input terminal 32 of the power distribution box 30.

It will be understood that the total positive terminal 21 and the positive input terminal 31 are connected through the bus bar, and the total negative terminal 22 and the negative input terminal 32 are connected through the bus bar to electrically connect the battery assembly 200 and the power distribution box 30. Through the above arrangement, the bus bar can connect the total positive terminal 21 to the positive input terminal 31 and the total negative terminal 22 to the negative input terminal 32 in the shortest path, to ensure the bus bar can connect the battery assembly 200 and the power distribution box 30 in the shortest length dimension, and at the same time, reducing the number of fixing components required for fixing the bus bar.

According to the battery pack assembly 1 of the present disclosure, the first projection point 13 and the second projection point 14 are located in the first line segment 12, to ensure the path of the bus bar connecting the power distribution box 30 and the battery assembly 200 is shortened, thereby reducing the length dimension of the bus bar, thereby reducing the production cost of the battery pack assembly 1, and at the same time, reducing the number of fixing components required for fixing the bus bar, improving the assembly efficiency of the battery pack assembly, and further reducing the production cost of the battery pack assembly.

According to some embodiments of the present disclosure, a plurality of accommodating cavities 10a are configured, and the battery assembly 200 includes a plurality of battery packs 20 connected in series and/or in parallel with each other, and a battery pack 20 is accommodated in an accommodating cavity 10a.

It will be understood that the tray 10 includes a plurality of accommodating cavities 10a, and the plurality of accommodating cavities 10a respectively accommodate the battery packs 20, and the plurality of battery packs 20 connected in series and/or in parallel to each other are configured as the battery assembly 200. It will be noted that an accommodating space may be formed in the tray 10, the accommodating space may be divided into a plurality of accommodating areas, the accommodating area may be configured as the accommodating cavity 10a, and the plurality of battery packs 20 may be accommodated in the plurality of accommodating areas, respectively. A partition may be arranged in the tray 10, and the partition partitions the accommodating space into a plurality of accommodating areas, which is not limited herein.

According to some embodiments of the present disclosure, the plurality of accommodating cavities 10a include a first accommodating cavity 10b and a second accommodating cavity 10c, the total positive terminal 21 is located in the first accommodating cavity 10b, the total negative terminal 22 is located in the second accommodating cavity 10c, in the height direction, the power distribution box 30 is arranged above the battery pack 20, the projection of the positive input terminal 31 on the bottom plate 19 is located in the first accommodating cavity 10b, and the projection of the negative input terminal 32 on the bottom plate 19 is located in the second accommodating cavity 10c.

In some embodiments, one end of the plurality of accommodating cavities 10a in the horizontal direction is configured as the first accommodating cavity 10b, the other end of the plurality of accommodating cavities 10a in the horizontal direction is configured as the second accommodating cavity 10c, the power distribution box 30 is arranged above the battery assembly 200, and the projection of the power distribution box 30 in the height direction is located in all accommodating cavities 10a, at this time, the projection of the positive input terminal 31 on the bottom plate 19 is located in the first accommodating cavity 10b, and the projection of the negative input terminal 32 on the bottom plate 19 is located in the second accommodating cavity 10c. When assembling the battery pack assembly 1, the power distribution box 30 is arranged above the battery assembly 200 and the positive input terminal 31 of the power distribution box 30 is arranged above the first accommodating cavity 10b, and the negative input terminal 32 of the power distribution box 30 is arranged above the second accommodating cavity 10c, thereby the bus bar connecting the positive input terminal 31 and the total positive terminal 21 can connect the positive input terminal 31 and the total positive terminal 21 above the first accommodating cavity 10b, and the bus bar connecting the negative input terminal 32 and the total negative terminal 22 can connect the negative input terminal 32 and the total negative terminal 22 above the second accommodating cavity 10c, to ensure the bus bar connects the battery assembly 200 and the power distribution box 30 with a shorter length dimension.

According to some embodiments of the present disclosure, as shown in FIG. 9, the plurality of accommodating cavities 10a include a first accommodating cavity 10b and a second accommodating cavity 10c, the total positive terminal 21 is located in the first accommodating cavity 10b, and the total negative terminal 22 is located in the second accommodating cavity 10c. In the horizontal direction, the power distribution box 30 is arranged on one side of the outer periphery of the battery assembly 200, the projection of the positive input terminal 31 on the frame 17 is located in the first accommodating cavity 10b, and the projection of the negative input terminal 32 on the frame 17 is located in the second accommodating cavity 10c.

In some embodiments, the power distribution box 30 is arranged on one side of the outer periphery of the battery assembly 200, and in the horizontal direction, the projection of the power distribution box 30 on the frame 17 is located in all accommodating cavities 10a, the projection of the positive input terminal 31 on the frame 17 is located in the first accommodating cavity 10b, and the projection of the negative input terminal 32 on the frame 17 is located in the second accommodating cavity 10c.

When assembling the power distribution box 30, in the projection range of the first accommodating cavity 10b perpendicular to the frame 17, the bus bar connected to the total positive terminal 21 can be directly connected to the positive input terminal 31, and in the projection range of the second accommodating cavity 10c perpendicular to the frame 17, the bus bar connected to the total negative terminal 22 can be directly connected to the negative input terminal 32. Thus, after the two bus bars respectively connect the positive input terminal 31 to the total positive terminal 21 and the negative input terminal 32 to the total negative terminal 22, the length dimension of the two bus bars is small and the number of fixing components for fixing the bus bars is reduced.

According to some embodiments of the present disclosure, the horizontal direction includes a width direction and a length direction, the plurality of accommodating cavities 10a are spaced apart in the length direction and/or the width direction, and the power distribution box 30 extends along the length direction and/or the width direction.

In some embodiments, the plurality of accommodating cavities 10a may be spaced apart along the length direction of the battery pack assembly 1, and at this time, the power distribution box 30 extends in the length direction, to ensure the bus bar connects the battery assembly 200 and the power distribution box 30 with a shorter length dimension. In other embodiments, the plurality of accommodating cavities 10a may be spaced apart along the width direction of the battery pack assembly 1, and at this time, the power distribution box 30 extends in the width direction. In some other embodiments, the plurality of accommodating cavities 10a may be spaced apart along the length direction and the width direction of the battery pack assembly 1, at this time, the plurality of accommodating cavities 10a are configured in a " 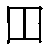 " shape, and the power distribution box 30 extends along the length direction and the width direction, that is, one end of the power distribution box 30 is positively opposed to the total positive terminal 21 and the other end is positively opposed to the total negative terminal 22.

As a result, by the above arrangement, both ends of the power distribution box 30 can be positively opposed to the total positive terminal 21 and the total negative terminal 22 of the battery assembly 200, respectively, to ensure the bus bar connects the battery assembly 200 and the power distribution box 30 with the shortest length dimension, and the number of fixing components for fixing the bus bar can be reduced.

According to some embodiments of the present disclosure, as shown in FIG. 5, in the width direction or the length direction, the distance between one side of the power distribution box 30 and one side edge of the tray 10 opposite to the power distribution box 30 is L1, and the distance between the other side of the power distribution box 30 and the other side edge of the tray 10 opposite to the power distribution box 30 is L2, and satisfies: 0.8 ≤ L1/L2 ≤ 1.2.

In some embodiments, the electrical device may be configured as a vehicle, the battery pack assembly 1 is arranged on the chassis of the vehicle, a sub-instrument panel is arranged between the main driver's seat and the co-pilot seat of the vehicle, the sub-instrument panel is adapted to provide an item placement area for the driver, and in order to facilitate the driver to access items, only the upper part of the sub-instrument panel is arranged with a storage space, and the lower part of the sub-instrument panel is divided into an unused area. As a result, the power distribution box 30 can be arranged in the unused area of the sub-instrument panel by the above arrangement, thereby improving the space utilization rate of the vehicle. Here, the frame 17 of the tray 10 defines the edge of the tray 10, and in the width direction or the longitudinal direction, the distance between one side of the power distribution box 30 and one side of the frame 17 opposite to the power distribution box 30 is L1, and the distance between the other side of the power distribution box 30 and the other side of the frame 17 opposite to the power distribution box 30 is L2.

It will be understood that in the width direction or the length direction, the width dimension of the power distribution box 30 is L3, and the width dimension of the tray 10 is L4, and satisfies: L1+L2+L3 = L4, and 0.8 ≤ L1/L2 ≤ 1.2, and the power distribution box 30 can be accommodated in the unused area of the sub-instrument panel by the above arrangement, and the space utilization rate of the vehicle can be improved, and in some embodiments, L1/L2 = 1.

According to some embodiments of the present disclosure, the battery pack assembly 1 further includes a battery pack output terminal, the battery pack output terminal is arranged on the tray 10, and the battery pack output terminal is adapted to be connected to the power distribution box 30 through the connection row 51. It will be understood that the electrical device is adapted to be connected to the battery pack output terminal, the battery pack output terminal is connected to the power distribution box 30 through the connection row 51, and the power distribution box 30 is connected to the battery assembly 200 through the bus bar, thereby the electrical device is connected to the battery pack output terminal to ensure the battery assembly 200 supplies power to the electrical device, which facilitates the connection between the electrical device and the battery pack assembly 1 and improves the assembly efficiency of the electrical device.

According to some embodiments of the present disclosure, as shown in FIGS. 1 to 6, the battery pack output terminal includes a first terminal 41 and a second terminal 42, and the first terminal 41 and the second terminal 42 are located at both ends of the tray 10 along the extending direction of the power distribution box 30 and arranged opposite to both ends of the power distribution box 30.

In some embodiments, in the extending direction of the power distribution box 30, the first terminal 41 and the second terminal 42 are respectively arranged at both ends of the tray 10, and the first terminal 41 and the second terminal 42 are respectively arranged opposite to both ends of the power distribution box 30, thereby after the connection row 51 and the first terminal 41 or the second terminal 42 are connected, the connection row 51 directly extends toward the power distribution box 30 to the end of the power distribution box 30 and is connected to the power distribution box 30, shortening the length dimension of the connection row 51, thereby reducing the production cost of the battery pack assembly 1, and at the same time, reducing the number of fixing components required for fixing the bus bar, improving the assembly efficiency of the battery pack assembly, and further reducing the production cost of the battery pack assembly.

In some embodiments, the battery pack output terminal further includes a third terminal 43 and a fourth terminal 44, the third terminal 43 and the fourth terminal 44 are arranged on one side of the tray 10 in the extending direction of the power distribution box 30, or the third terminal 43 and the fourth terminal 44 are arranged on both sides of the tray 10 in the extending direction of the power distribution box 30, respectively, the first terminal 41 is configured as a fast charging terminal, the third terminal 43 is configured as a slow charging terminal, the third terminal 43 is connected to the end of the power distribution box 30 through a first wire harness 54, the fourth terminal 44 is configured as a detection terminal, and an operator can detect information such as the temperature of the battery pack assembly 1 by connecting a detection device to the detection terminal, and the fourth terminal 44 is connected to the end of the power distribution box 30 through a second wire harness 55, thereby shortening the length dimensions of the first wire harness 54 and the second wire harness 55 by the above arrangement and reducing the production cost of the battery pack assembly 1.

According to some embodiments of the present disclosure, the battery pack assembly 1 further includes a protective case, the protective case is connected to the tray 10, and the protective case is adapted to cover the connection between the battery pack output terminal and the connection row 51, thereby preventing the operator from contacting the connection between the battery pack output terminal and the connection row 51 and causing danger, and improving the safety factor of the battery pack assembly 1.

In some embodiments, the battery pack output terminal includes the first terminal 41 and the second terminal 42, the first terminal 41 and the connection row 51 are electrically connected, the second terminal 42 and the connection row 51 are electrically connected, the connection between the first terminal 41 and the connection row 51 is arranged with a protective case, and the protective case is adapted to cover the connection between the first terminal 41 and the connection row 51 to prevent the operator from contacting the connection between the first terminal 41 and the connection row 51, thereby preventing the operator from getting electric shock and causing danger, and improving the safety factor of the battery pack assembly 1. In other embodiments, the connection between the second terminal 42 and the connection row 51 is arranged with a protective case, and the protective case is adapted to cover the connection of the second terminal 42 and the connection row 51 to prevent the operator from contacting the connection between the second terminal 42 and the connection row 51. In some other embodiments, the connection between the first terminal 41 and the connection row 51 and the connection between the second terminal 42 and the connection row 51 are arranged with protective cases, and the protective cases are adapted to prevent the operator from getting electric shock and causing danger, and improving the safety factor of the battery pack assembly 1.

According to some embodiments of the present disclosure, the battery pack assembly 1 further includes:a positive bus bar 52 and a negative bus bar 53, the positive bus is connected to the total positive terminal 21 and the positive input terminal 31, and the negative bus bar 53 is connected to the total negative terminal 22 and the negative input terminal 32, to ensure the battery assembly 200 is connected to the power distribution box 30. It will be understood that the positive bus bar 52 and the negative bus bar 53 are configured as the bus bars.

According to some embodiments of the present disclosure, the positive bus bar 52 is accommodated in the first accommodating cavity 10b, and/or the negative bus bar 53 is accommodated in the second accommodating cavity 10c.

In some embodiments, the positive bus bar 52 is located in the first accommodating cavity 10b, and the positive bus bar 52 connects the total positive terminal 21 and the positive input terminal 31, thereby reducing the length dimension of the positive bus bar 52. In other embodiments, the negative bus bar 53 is located in the second accommodating cavity 10c, and the negative bus bar 53 connects the total negative terminal 22 and the negative input terminal 32, thereby reducing the length dimension of the negative bus bar 53. In some other embodiments, the positive bus bar 52 located in the first accommodating cavity 10b connects the total positive terminal 21 and the positive input terminal 31, and the negative bus bar 53 located in the second accommodating cavity 10c connects the total negative terminal 22 and the negative input terminal 32, thereby reducing the length dimension of the positive bus bar 52 and the negative bus bar 53, thereby reducing the production cost of the battery pack assembly 1.

According to some embodiments of the present disclosure, as shown in FIG. 10, the power distribution box 30 has a side portion 301 in the length direction, one side of the power distribution box 30 away from the tray 10 has a top portion 302, and the positive input terminal 31 and the negative input terminal 32 are arranged on the side portion 301 and/or the top portion 302; the positive bus bar 52 is arranged on one side of the power distribution box 30 and connects the total positive terminal 21 and the positive input terminal 31 of the battery assembly 200; the negative bus bar 53 is arranged on one side or the other side of the power distribution box 30 and connects the total negative terminal 22 and the negative input terminal 32 of the battery assembly 200.

In some embodiments, both the positive input terminal 31 and the negative input terminal 32 are arranged on the side portion 301 of the power distribution box 30. In other embodiments, one of the positive input terminal 31 and the negative input terminal 32 is arranged on the top portion 302 of the power distribution box 30, and the other of the positive input terminal 31 and the negative input terminal 32 is arranged on the side portion 301 of the power distribution box 30. In some other embodiments, both the positive input terminal 31 and the negative input terminal 32 are arranged on the side portion 301 of the power distribution box 30, which is not limited herein.

In some embodiments, the battery packs 20 in the plurality of accommodating cavities 10a have a total positive electrode terminal 21 and a total negative electrode terminal 22 after being connected, and among the plurality of battery packs 20, one electrode of one battery pack 20 is configured as the total positive terminal 21 and one electrode of the other battery pack 20 is configured as the total negative terminal 22. It will be understood that the total positive terminal 21 and the total negative terminal 22 may be located on the same side of the tray 10 in the width direction, and the total positive terminal 21 and the total negative terminal 22 may be located on both sides of the tray 10 in the width direction, respectively.

When the total positive terminal 21 and the total negative terminal 22 are located on the same side of the tray 10 in the width direction, one end of the positive bus bar 52 is connected to the total positive terminal 21, the other end of the positive bus bar 52 extends toward the power distribution box 30 and is connected to one side of the power distribution box 30, one end of the negative bus bar 53 is connected to the total negative terminal 22, and the other end of the negative bus bar 53 extends toward the power distribution box 30 and is connected to one side of the power distribution box 30, at this time, the positive bus bar 52 and the negative bus bar 53 are connected to the same side of the power distribution box 30; when the total positive terminal 21 and the total negative terminal 22 are respectively located on both sides of the tray 10 in the width direction, the electrode bus bar 52 and the negative bus bar 53 are respectively connected to both sides of the power distribution box 30 in the width direction.

As a result, the positive bus bar 52 and the negative bus bar 53 can be arranged in the shortest path, the length dimensions of the positive bus bar 52 and the negative bus bar 53 are shortened, the production cost of the battery pack assembly 1 is reduced, the number of fixing components required for fixing the positive bus bar 52 and the negative bus bar 53 is reduced, and the assembling efficiency of the positive bus bar 52 and the negative bus bar 53 is improved, thereby improving the production efficiency of the battery pack assembly 1.

According to some embodiments of the present disclosure, at least one of the connection between the positive input terminal 31 and the positive bus bar 52 and the connection between the negative input terminal 32 and the negative bus bar 53 is arranged on the top portion 302 and/or the side portion 301, and an operation space is arranged on the side of the connection facing away from the tray 10, and the operation space is convenient for the connection between the positive input terminal 31 and the positive bus bar 52 and the connection between the negative input terminal 32 and the negative bus bar 53, which can improve the connection efficiency between the power distribution box 30 and the battery assembly 200.

In some embodiments, the connection between the positive input terminal 31 and the positive bus bar 52 is configured as a first connection point, the connection between the negative input terminal 32 and the negative bus bar 53 is configured as a second connection point, and both the first connection point and the second connection point are arranged on the top portion 302 of the power distribution box 30. In other embodiments, both the first connection point and the second connection point are arranged on the side portion 301 of the power distribution box 30. In some other embodiments, one of the first connection point and the second connection point is arranged at the top portion 302 of the power distribution box 30, and the other of the first connection point and the second connection point is arranged at the side portion 301 of the power distribution box 30, there is no limitation herein.

According to some embodiments of the present disclosure, as shown in FIGS. 1 to 6, the battery pack assembly 1 further includes a cross beam 11, the cross beam 11 is arranged between two adjacent accommodating cavities 10a, and at least a part of the power distribution box 30 is located on one side of the cross beam 11 away from the bottom plate 19 and fixed to the cross beam 11.

In some embodiments, the cross beam 11 is configured as the partition, and the cross beam 11 is adapted to partition a plurality of accommodating cavities 10a in the tray 10. It will be understood that the cross beam 11 is adapted to provide an assembling point for the power distribution box 30, to ensure the power distribution box 30 can be stably arranged above the battery assembly 200, improving the installation stability of the power distribution box 30, and the cross beam 11 is adapted to block two adjacent accommodating cavities 10a, avoiding the communication between the plurality of accommodating cavities 10a. In some embodiments, a thermal runaway of the battery pack 20 will generate high-temperature gas, and the blocking between the plurality of the accommodating cavities 10a can prevent the high-temperature charged gas from entering the accommodating cavity 10a without thermal runaway, thereby preventing the high-temperature gas from contacting the battery pack 20 without thermal runaway, thereby preventing the thermal runaway of the entire battery pack assembly 1, and improving the safety factor of the battery pack assembly 1.

According to some embodiments of the present disclosure, as shown in FIGS. 1 to 6, the battery pack assembly 1 further includes a pressure plate 60, the pressure plate 60 is arranged on the top portion of the battery assembly 200, and at least a part of the power distribution box 30 is arranged on one side of the pressure plate 60 facing away from the tray 10 and is fixedly connected to the pressure plate 60. In some embodiments, the battery pack 20 is constructed from a plurality of batteries, the plurality of batteries are connected in series and/or in parallel with each other to form the battery pack 20, the plurality of battery packs 20 are respectively accommodated in corresponding accommodating cavities 10a, and the plurality of battery packs 20 are respectively connected in series and/or parallel to each other to form the battery assembly 200, and the pressure plate 60 is arranged on the top portion of the plurality of batteries to limit the plurality of batteries, to ensure the plurality of batteries can be stably accommodated in the respective accommodating cavities 10a. At the same time, the power distribution box 30 is arranged on one side of the pressure plate 60 facing away from the tray 10, and the pressure plate 60 is adapted to provide an assembling point for the power distribution box 30, to ensure the power distribution box 30 can be stably arranged above a plurality of batteries, and at the same time, the pressure plate 60 can prevent the power distribution box 30 from contacting the batteries, improving the safety factor of the battery pack assembly 1.

According to some embodiments of the present disclosure, as shown in FIG. 6, the battery pack assembly 1 further includes a cover plate 80, the cover plate 80 cooperates with the tray 10, at least a part of the cover plate 80 is formed with a recess facing away from the tray 10 in the height direction, the recess is adapted to accommodate the power distribution box 30, the cover plate 80 is connected to the tray 10 to enclose the recess and the plurality of accommodating cavities 10a. It will be understood that the cover plate 80 encloses a power distribution cavity and the plurality of accommodating cavities 10a, which can prevent the battery and the power distribution box 30 from separating from the accommodating cavity 10a and the power distribution cavity, thereby improving the installation stability of the battery and the power distribution box 30, and preventing rain and the like from contacting the battery and the power distribution box 30, so as not to affect the normal operation of the battery pack assembly 1. At the same time, it is possible to avoid an acceleration of the aging speed of the battery and the power distribution box 30 due to the exposure of the battery, and to prolong a service life of the battery and the power distribution box 30, thereby prolonging a service life of the battery pack assembly 1.

According to some embodiments of the present disclosure, the power distribution box 30 includes a base and a power distribution box case, both ends of the base are respectively formed with a charging port and a discharge port, the charging port and the discharge port are respectively connected to the first terminal 41 and the second terminal 42, the same side of the base is arranged with the positive terminal 31 and the negative input terminal 32, the base is adapted to be fixedly connected to the pressure plate 60 and the cross beam 11, and the power distribution box case covers the upper surface of the base and is snap-fitted with the base. As a result, the base is fixed to the pressure plate 60 and the cross beam 11, respectively, and the installation stability of the base is improved, thereby improving the installation stability of the power distribution box 30.

In some embodiments, the outer periphery of the base is arranged with a snap block extending away from the base in the length direction or the width direction, the outer periphery of the power distribution box case is arranged with a snap leg corresponding to the snap block one-to-one, a free end of the snap leg extend toward the base and is formed with a snap hole, and the snap block is accommodated in the snap hole to quickly connect the power distribution box case to the base, thereby improving the assembly efficiency of the power distribution box 30. In other embodiments, the outer periphery of the base is arranged with a plurality of snap legs, the free ends of the plurality of snap legs extend toward the power distribution box case and are formed with snap holes, the outer periphery of the power distribution box case is formed with snap blocks corresponding to the snap legs one-to-one, and the snap blocks are accommodated in the snap holes to quickly connect the power distribution box case to the base, thereby improving the assembly efficiency of the power distribution box 30.

According to some embodiments of the present disclosure, as shown in FIGS. 1 to 6, a fastener mounting groove 33 is formed on the lower surface of the base, and a nut is formed on the pressure plate 60 and/or the cross beam 11, and the nut is accommodated in the fastener mounting groove 33; the battery pack assembly 1 further includes a bolt 70, the bolt 70 passes through the bottom wall of the fastener mounting groove 33 and is fixed to the nut.

In some embodiments, the fastener mounting groove 33 is formed on the lower surface of the base, the fastener mounting groove 33 extends in the height direction, and the nut is formed on the pressure plate 60, and the nut is directly opposite to the fastener mounting groove 33. After the power distribution box 30 is set at a preset installation position, the nut is accommodated in the fastener mounting groove 33, the nut can cooperate with the fastener mounting groove 33 to limit the power distribution box 30, thereby avoiding a position offset of the power distribution box 30 when the bolt 70 passes through the bottom wall of the fastener mounting groove 33 and is fixed with the nut, improving the installation efficiency of the power distribution box 30, the nut herein may be a welding nut 61, or may be integrally formed with the pressure plate 60, which is not limited herein. In other embodiments, the nut is formed on the cross beam 11, the nut is opposite to the fastener mounting groove 33 in the height direction, and the bolt 70 passes through the bottom wall of the fastener mounting groove 33 and cooperates with the nut to fix the base to the cross beam 11, thereby improving the installation stability of the power distribution box 30, the nut herein may be a welding nut 61 or a riveting nut 111, which is not limited here.

In some other embodiments, nuts are arranged on the pressure plate 60 and the cross beam 11, and the base is respectively arranged with the fastener mounting grooves 33 corresponding to the nuts one-to-one, the fastener mounting groove 33 extends in the height direction, and the bolt 70 passes through the bottom wall of the fastener mounting groove 33 and cooperates with the nut to fix the base, thereby improving the installation stability of the power distribution box 30, and at the same time improving the installation convenience of the bolt 70, thereby improving the assembly efficiency of the power distribution box 30.

As a result, the operator can match the bolt 70 with the nut in the height direction, improving the connection convenience of the bolt 70 and the nut, thereby improving the assembly efficiency of the power distribution box 30, and at the same time, the fastener mounting groove 33 is adapted to accommodate the nut and the bolt 70, avoiding the bolt 70 and the nut from being exposed to the power distribution box 30, and improving the aesthetic appearance of the battery pack assembly 1.

According to some embodiments of the present disclosure, as shown in FIGS. 2 to 4, a clearance hole 34 directly opposite to the fastener mounting groove 33 is formed on the power distribution box case. It will be understood that the clearance hole 34 is adapted to avoid the bolt 70 when the bolt 70 is installed, thereby avoiding the influence of the power distribution box case on the installation of the bolt 70, and improving the installation efficiency of the bolt 70, thereby improving the assembly efficiency of the power distribution box 30.

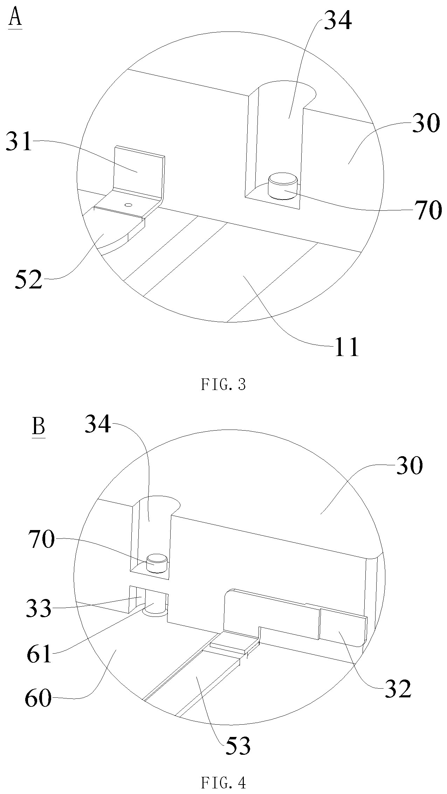

According to some embodiments of the present disclosure, as shown in FIGS. 3 to 4, a through hole is formed in the bottom wall of the fastener mounting groove 33, and a support sleeve is arranged in the through hole, and the support sleeve is sleeved on the outer periphery of the bolt 70 and supported between the nut and the head of the bolt 70. It will be understood that the support sleeve is extended into the through hole, and the bolt 70 is extended into the support sleeve, the support sleeve can improve the structural strength of the through hole and avoid damage to the bottom wall of the fastener mounting groove 33 caused by excessive mating force between the bolt 70 and the nut.

According to some embodiments of the present disclosure, an explosion-proof valve of the battery is arranged on the outer peripheral wall and/or the bottom wall of the battery.

In some embodiments, the explosion-proof valve of the battery is arranged on the outer peripheral wall of the battery, as a result, the high-temperature gas generated during thermal runaway of the battery is discharged in the length direction or the width direction, to ensure the power distribution box 30 and the explosion-proof valve are isolated from each other, thereby preventing the high-temperature gas from contacting the power distribution box 30 and affecting the operation of the power distribution box 30, and improving the safety factor of the battery pack assembly 1. In other embodiments, the explosion-proof valve of the battery is arranged on the bottom wall of the battery, and the high-temperature gas generated by the thermal runaway of the battery is discharged from the bottom wall of the battery, thereby preventing the high-temperature gas from contacting the power distribution box 30, and improving the safety factor of the battery pack assembly 1. In other embodiments, the explosion-proof valve of the battery is arranged on the outer peripheral wall and the bottom wall of the battery, and the high-temperature gas generated by the thermal runaway of the battery can be discharged from the side facing away from the power distribution box 30 in the length direction, the width direction, or the height direction, thereby preventing the high-temperature gas from contacting the power distribution box 30 , and improving the safety factor of the battery pack assembly 1.

Hereinafter, an electrical device 100 according to the present disclosure will be briefly described.

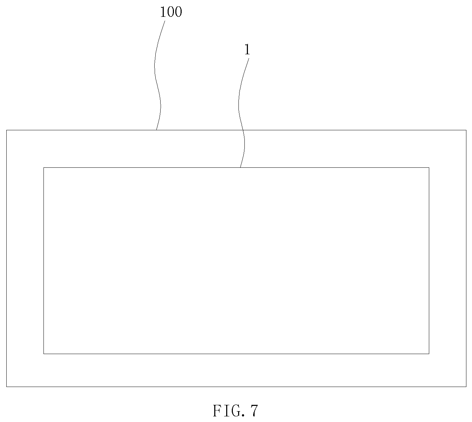

As shown in FIG. 7, the electrical device 100 according to the present disclosure is arranged with the battery pack assembly 1 according to the above embodiment, and since the battery pack assembly 1 according to any one of the above embodiments is arranged on the electrical device 100 according to the present disclosure, the production efficiency of the electrical device 100 is high and the production cost is low.

Here, the electrical device 100 may be an energy storage system or a vehicle.

In the description of the present specification, a description with reference to the terms "one embodiment," "some embodiments," "exemplary embodiments," "examples," "specific examples," or "some examples," etc. means that a specific feature, structure, material, or characteristic described in connection with the embodiment or example is included in at least one embodiment or example of the present disclosure. In the present specification, schematic expressions of the above terms do not necessarily refer to the same embodiments or examples. Moreover, the specific features, structures, materials, or features described may be combined in a suitable manner in any one or more embodiments or examples.

Although the embodiments of the present disclosure have been shown and described, it will be understood by those skilled in the art that various changes, modifications, substitutions, and variations can be made to these embodiments without departing from the principles and spirits of the present disclosure, the scope of which is defined by the claims and their equivalents.

## Claims

1. A battery pack assembly (1) comprising:
a tray (10), the tray (10) having a bottom plate (19) and a frame (17), the frame (17) being arranged on the bottom plate (19) and forming an accommodating cavity (10a) together with the bottom plate (19);
a battery assembly (200), the battery assembly (200) having a total positive terminal and a total negative terminal;
a power distribution box (30), the power distribution box (30) having a positive input terminal (31) and a negative input terminal (32), the power distribution box (30) being arranged on one side of the battery assembly (200);
a first line segment (12) being arranged between projections of a total positive terminal (21) and a total negative terminal (22) on the frame (17) in a direction perpendicular to the frame (17), a first projection point (13) and a second projection point (14) are respectively defined by projections of the positive input terminal (31) and the negative input terminal (32) on the corresponding frame (17) in the direction perpendicular to the frame (17), the first projection point (13) and the second projection point (14) are located in the first line segment (12).

2. The battery pack assembly (1) according to claim 1, wherein the accommodating cavities (10a) are provided in a plurality, the battery assembly (200) comprises a plurality of battery packs (20) connected in series or in parallel with each other, and one of the battery packs (20) is accommodated in one of the accommodating cavities (10a).

3. The battery pack assembly (1) according to claim 2, wherein the plurality of accommodating cavities (10a) comprise a first accommodating cavity (10b) and a second accommodating cavity (10c), the total positive terminal (21) is located in the first accommodating cavity (10b), the total negative terminal (22) is located in the second accommodating cavity (10c), the power distribution box (30) is arranged above the battery pack (20) in a height direction, a projection of the positive input terminal (31) on the bottom plate (19) is located in the first accommodating cavity (10b), and a projection of the negative input terminal (32) on the bottom plate (19) is located in the second accommodating cavity (10c).

4. The battery pack assembly (1) according to claim 2 or 3, wherein the plurality of accommodating cavities (10a) comprise a first accommodating cavity (10b) and a second accommodating cavity (10c), the total positive electrode terminal (21) is located in the first accommodating cavity (10b), the total negative electrode terminal (22) is located in the second accommodating cavity (10c), the power distribution box (30) is arranged on one side of the outer periphery of the battery assembly (200) in a horizontal direction, and a projection of the positive input terminal (31) on the frame (17) is located in the first accommodating cavity (10b), and a projection of the negative input terminal (32) on the frame (17) is located in the second accommodating cavity (10c).

5. The battery pack assembly (1) according to any one of claims 2 to 4, wherein the horizontal direction comprises a width direction and a length direction, the plurality of accommodating cavities (10a) are spaced apart in the length direction or the width direction, and the power distribution box (30) extends in the length direction or the width direction.

6. The battery pack assembly (1) according to claim 5, wherein in the width direction or the length direction, a distance between one side of the power distribution box (30) and one side edge of the tray (10) opposite to the power distribution box (30) is L1, and a distance between the other side of the power distribution box (30) and the other side edge of the tray (10) opposite to the power distribution box (30) is L2, and satisfies: 0.8 ≤ L1/L2 ≤ 1.2.

7. The battery pack assembly (1) according to claim 5 or 6, further comprising:
a battery pack output terminal, the battery pack output terminal is arranged on the tray (10) and the battery pack output terminal is adapted to be connected to the power distribution box (30) through a connection row (51).

8. The battery pack assembly (1) according to claim 7, wherein the battery pack output terminal comprise a first terminal (41) and a second terminal (42), and the first terminal (41) and the second terminal (42) are located at both ends of the tray (10) along an extending direction of the power distribution box (30) and arranged opposite to both ends of the power distribution box (30).

9. The battery pack assembly (1) according to claim 7 or 8, further comprising:
a protective case, the protective case is connected to the tray (10), the protective case is adapted to cover a connection between the battery pack output terminal and the connection row (51).

10. The battery pack assembly (1) according to claim 3, further comprising: a positive bus bar (52) and a negative bus bar (53), the positive bus bar (52) is connected to the total positive terminal (21) and the positive input terminal (31), and the negative bus bar (53) is connected to the total negative terminal (22) and the negative input terminal (32) , to ensure the battery assembly (200) is connected to the power distribution box (30).

11. The battery pack assembly (1) according to claim 10, wherein the positive bus bar (52) is accommodated in the first accommodating cavity (10b), and the negative bus bar (53) is accommodated in the second accommodating cavity (10c).

12. The battery pack assembly (1) according to claim 10 or 11, wherein the power distribution box (30) has a side portion (301) in the length direction, one side of the power distribution box (30) away from the tray has a top portion (302), and the positive input terminal (31) and the negative input terminal (32) are arranged on the side portion (301) or the top portion (302);
the positive bus bar (52) is arranged on one side of the power distribution box (30) and connects the total positive terminal (21) of the battery assembly (200) to the positive input terminal (31);
the negative bus bar (53) is arranged on one side or the other side of the power distribution box (30) and connects the total negative terminal (22) of the battery assembly (200) to the negative input terminal (32).

13. The battery pack assembly (1) according to claim 12, wherein at least one of a connection between the positive input terminal (31) and the positive bus bar (52) and a connection between the negative input end (32) and the negative bus bar (53) is arranged on the top portion (302) or the side portion (301), and an operating space is arranged on one side of the connection facing away from the tray (10).

14. The battery pack assembly (1) according to any one of claims 2 to13, further comprising: a cross beam (11), the cross beam (11) is arranged between two adjacent accommodating cavities (10a), and at least a part of the power distribution box (30) is arranged on one side of the cross beam (11) away from the bottom plate (19) and fixed to the cross beam (11).

15. The battery pack assembly (1) according to any one of claims 2 to 14, further comprising: a pressure plate (60), the pressure plate (60) is arranged on the top portion of the battery pack (20), and at least a part of the power distribution box (30) is arranged on one side of the pressure plate (60) facing away from the tray (10) and fixed to the pressure plate (60).

16. The battery pack assembly (1) according to any one of claims 1 to 15, further comprising: a cover plate (80), the cover plate (80) is cooperated with the tray (10), at least a part of the cover plate (80) is formed with a recess facing away from the tray (10) in the height direction, the recess is adapted to accommodate the power distribution box (30), the cover plate (80) is connected to the tray (10) to enclose the recess and the plurality of the accommodating cavities (10a).

17. An electrical device, comprising the battery pack assembly (1) according to any one of claims 1 to 16.
